# NOUVEAU FASCICULE DE BREVET EUROPEEN

(11) **EP 2 732 273 B2**
(45) Date de publication et mention de la décision concernant l'opposition: **23.11.2022**
(45) Mention de la délivrance du brevet: 29.08.2018
(21) Numéro de dépôt: 12744080.8
(22) Date de dépôt: 11.07.2012
(51) Int. Cl.: G01N 21/90, G01N 21/95, G01N 21/88, B29C 65/82

(54) **PROCEDE D'ACQUISITION DE PLUSIEURS IMAGES D'UN MEME EMBALLAGE A L'AIDE D'UNE SEULE CAMERA LINEAIRE**
VERFAHREN ZUR ERFASSUNG VON MEHREREN BILDERN DESSELBEN PAKETS MITHILFE EINER EINZIGEN LINEAREN KAMERA
METHOD OF ACQUIRING SEVERAL IMAGES OF THE SAME PACKAGE WITH THE AID OF A SINGLE LINEAR CAMERA

(30) Priorité: 11.07.2011 FR 1156303
(43) Date de publication de la demande: 21.05.2014
(73) Titulaire: Bizerba Luceo, FR-35772 Vern-sur-Seiche (FR)
(72) Inventeur: OLLIVIER, Michel, F-35690 Acigne (FR); ETIENNE, Jacques, F-35890 Laille (FR); PIROT, Eric, F-35510 Cesson Sevigne (FR); ROUBERT, Laurent, F-35890 Bourg Des Comptes (FR)
(74) Mandataire: Cabinet Beau de Loménie
(86) Numéro de dépôt international: PCT/FR2012/051640
(87) Numéro de publication internationale: WO 2013/007951

(56) Documents cités:
- EP-A1- 0 898 163
- EP-A1- 0 955 538
- EP-A1- 0 961 113
- EP-A1- 1 118 854
- EP-A1- 2 144 052
- EP-A2- 0 675 466
- EP-A2- 0 926 486
- EP-A2- 1 790 975
- EP-B1- 1 902 308
- WO-A1-2004/052071
- WO-A1-2010/052431
- WO-A1-2010/133341
- WO-A1-2011/050873
- DE-A1-102007 046 792
- DE-A1-102007 058 888
- DE-A1-102008 001 174
- DE-A1-102009 050 711
- DE-B3-102008 001 173
- DE-B4-102008 001 171
- DE-T2- 69 838 155
- FR-A1- 2 846 425
- FR-A1- 2 907 424
- FR-A1- 2 907 553
- US-A1- 2006 244 954
- US-A1- 2009 095 047
- US-A1- 2010 110 174
- US-A1- 2012 307 236

## Description

La présente invention concerne le domaine technique de l'inspection optoélectronique des emballages de produits relevant du domaine agroalimentaire, de la pharmacie ou de la cosmétique, c'est-à-dire périssables. Dans ce domaine d'application, l'objet de l'invention vise plus précisément le contrôle de la qualité des soudures des emballages thermoscellés.

Dans le domaine de l'inspection d'emballages thermoscellés, il apparaît le besoin de contrôler la qualité des soudures de l'emballage pour détecter par exemple la présence de bulles ou la présence d'intrus ou de corps étrangers.

Il est ainsi connu par exemple par le document WO 2010/052431 de faire défiler devant une caméra linéaire, les emballages éclairés par une source lumineuse. Le défilement d'un emballage devant la caméra linéaire permet l'acquisition d'une série d'images linéaires qui sont traitées pour détecter des défauts présents dans les soudures.

Ce type d'inspection donne satisfaction en pratique pour contrôler des emballages dont la zone d'inspection incluant les soudures possède des caractéristiques optiques sensiblement identiques ou homogènes. Le choix judicieux de la source lumineuse permet de mettre en évidence les défauts présentés par les soudures de tels emballages. Cependant, il apparaît de plus en plus fréquemment que le caractère de transmission ou de réflexion lumineuse des zones inspectées n'est pas homogène. En effet, certaines parties des zones inspectées comportent des inscriptions ou une coloration alors que les autres parties sont transparentes. Les caractéristiques ou propriétés optiques des matériaux de l'alvéole et/ou du film peuvent varier localement entre transparent, translucide, diffusant ou opaque, réfléchissant ou mat, en teinte, luminosité et saturation. Pour ce type d'emballage, l'utilisation d'une caméra et d'une source d'éclairage ne permet pas de détecter des défauts sur toutes les parties des soudures inspectées.

Pour tenter de remédier à cet inconvénient, il est connu de mettre en œuvre deux postes d'inspection équipés d'éclairages qui sont différents d'un poste à l'autre. Chaque poste est adapté pour détecter des défauts apparaissant dans une des deux zones de l'emballage présentant des caractéristiques optiques différentes. Le traitement séparé ou en combiné des images acquises par les deux postes permet de contrôler les emballages sur toute la zone à inspecter.

Cette solution est coûteuse puisqu'elle nécessite de réaliser deux postes d'inspection. De plus, cette solution est relativement complexe à mettre en œuvre en raison du traitement à réaliser sur les images provenant des deux postes qu'il est difficile d'amener en coïncidence. EP-1.902.308-B1 décrit un procédé d'inspection selon l'art antérieur.

Il apparaît ainsi le besoin de pouvoir disposer d'une technique d'inspection d'emballages, simple et peu onéreuse à mettre en œuvre, tout en étant conçue pour permettre de contrôler entièrement une zone d'inspection présentant localement des caractéristiques optiques non homogènes.

Pour atteindre un tel objectif, l'objet de l'invention concerne un procédé d'inspection de la qualité de soudures tel que défini par les revendications.

Un autre objet de l'invention vise à proposer un dispositif pour inspecter les soudures d'emballages contenant des produits tel que défini par les revendications.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique en élévation d'un exemple de réalisation d'un dispositif en dehors de l'invention.
La **Figure 2** est une vue de dessus du dispositif illustré à la **Fig. 1****.**
La **Figure 3** illustre un procédé d'inspection.
Les **Figures 4A** et **4B** illustrent un exemple d'application du procédé conforme à l'invention, à l'inspection d'emballages thermoscellés.
La **Figure 4C** est un chronogramme illustrant les conditions avec lesquelles les lignes d'images sont obtenues.

L'objet de l'invention concerne un procédé permettant d'inspecter un emballage **1** réalisé dans un matériau autorisant une inspection par prise d'images et contenant un produit périssable. Le procédé selon l'invention vise à contrôler la qualité des soudures présentées par de tels emballages. L'emballage **1** est réalisé en tout ou partie, en matériaux translucides ou transparents. Par exemple, l'emballage **1** contient un produit relevant par exemple du domaine agroalimentaire, pharmaceutique, ophtalmique ou cosmétique.

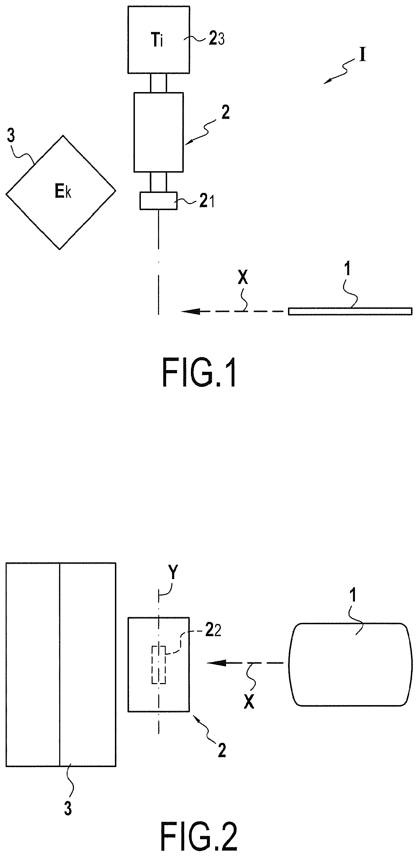

Les **Fig. 1** et **2** illustrent de manière schématique, un exemple d'un dispositif **I** permettant la mise en œuvre du procédé d'inspection. Le dispositif **I** comporte un capteur linéaire d'images **2** et un système d'éclairage **3** de l'emballage **1.** Le capteur linéaire d'images **2** tel qu'une caméra linéaire comporte un objectif **2₁** et une barrette **2₂** de cellules photosensibles s'étendant selon une direction **Y.** Le capteur linéaire d'images **2** présente ainsi une largeur de champ **L.** Le capteur linéaire d'images **2** délivre successivement des lignes d'images, et est relié à une unité de contrôle et de traitement **2₃** des images.

Conformément à l'invention, le capteur linéaire d'images **2** comporte un système permettant de régler son exposition à la lumière. Selon une variante préférée de réalisation, il est prévu d'utiliser une caméra linéaire avec un temps d'intégration réglable permettant de régler son exposition. Le temps d'intégration ou d'exposition est la durée pendant laquelle la surface sensible de la caméra linéaire est exposée à la lumière avant le transfert de ces charges électriques. Bien entendu, il pourrait être envisagé de régler le temps d'exposition du capteur linéaire d'images **2** de manière différente par exemple par un obturateur mécanique ou électronique piloté.

Le dispositif **I** comporte également un système non représenté assurant un mouvement relatif de l'emballage **1** par rapport au capteur linéaire **2** et au système d'éclairage **3** pour permettre une inspection de l'emballage **1** sur une zone d'inspection supérieure au champ du capteur linéaire **2.** Ainsi, la zone d'inspection réalisée par le capteur linéaire d'images **2** couvre la totalité ou une partie seulement d'un ou de plusieurs emballages **1.** Dans l'exemple illustré aux **Fig. 1** et **2****,** l'emballage **1** est déplacé suivant un mouvement de translation selon une direction de déplacement **X.** Bien entendu, le procédé selon l'invention peut présenter un mouvement de rotation combiné ou non à un mouvement en translation. De même, dans l'exemple illustré, l'emballage **1** est déplacé par rapport au capteur linéaire d'images **2** et au système d'éclairage **3.** Bien entendu, le procédé selon l'invention s'applique aussi pour un emballage **1** restant fixe alors que le capteur linéaire **2** et le système d'éclairage **3** sont montés mobiles par rapport à l'emballage **1.** Dans tous les cas, un mouvement relatif de l'emballage par rapport à la caméra permet un balayage (scan) des régions de l'emballage inspecté.

Le procédé d'inspection selon l'invention consiste à acquérir pour chaque incrément de mouvement, en l'occurrence un pas de translation de l'emballage **1,** une séquence de n lignes d'images successives prises par le capteur linéaire d'images **2** et dans des conditions d'éclairage différentes et/ou avec des temps d'exposition différents pour le capteur linéaire **2.**

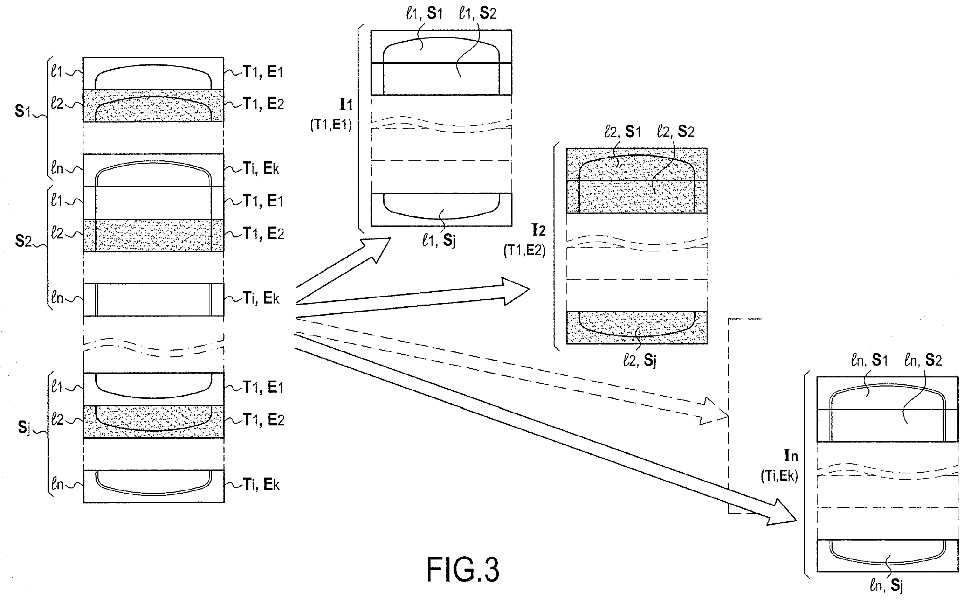

Ainsi, tel que cela ressort plus précisément de la **Fig. 3****,** lors de chaque incrément de mouvement, le capteur linéaire d'images **2** acquiert une séquence c'est-à-dire pour j incréments de mouvements, un nombre j de séquences successives **S1, S2,** ... **Sj.** Le capteur linéaire d'images **2** acquiert dans chaque séquence successive **S1, S2,** ... **Sj,** n lignes d'image **I1, I2,** ... **In** de la zone d'inspection correspondante de l'emballage **1** (avec n strictement supérieur à 1). Au sein de chaque séquence, chaque ligne d'image **I1, I2,** ... **In** de la séquence est acquise soit avec un temps d'exposition **Ti** différent du temps d'exposition des autres lignes d'image, soit selon des conditions d'éclairage **Ek** différentes des conditions d'éclairage des autres lignes d'images, soit avec un temps d'exposition **Ti** différent des autres lignes d'images et selon des conditions d'éclairage **Ek** différentes des autres lignes d'images.

Il ressort de ce qui précède que le système d'éclairage **3** est piloté de manière à fournir des conditions d'éclairage **Ek** qui peuvent être modifiées pour au moins certaines des lignes d'images prises pendant une séquence. Ainsi, le système d'éclairage **3** permet d'obtenir des conditions d'éclairage qui diffèrent par exemple, par la puissance lumineuse instantanée et/ou la durée d'éclairement et/ou le spectre de longueur d'onde et/ou l'état de polarisation et/ou la position du système d'éclairage par rapport à l'emballage et/ou la forme de la source de lumière du système d'éclairage et/ou leur directivité et/ou leur caractère diffus et/ou leur homogénéité.

Le système d'éclairage **3** peut comporter ainsi une ou plusieurs sources d'éclairage avec des caractéristiques lumineuses différentes et/ou des positionnements différents par rapport à l'emballage **1** et/ou des formes différentes (rectangulaire, allongée, etc.) et/ou des dimensions différentes. Selon une variante de réalisation, au moins une source lumineuse du système d'éclairage **3** est pilotée pour éclairer l'emballage **1** uniquement durant un temps strictement inférieur à l'inverse de la fréquence de lecture du capteur linéaire **2.** Selon une autre variante de réalisation, au moins une source lumineuse du système d'éclairage **3** est pilotée pour éclairer l'emballage **1** uniquement durant un temps d'exposition du capteur linéaire **2** correspondant à une des n lignes d'images **I1, I2,** ... **In** de chaque séquence.

Selon une autre caractéristique avantageuse de réalisation, le procédé consiste pour chaque acquisition d'une ligne d'image, avec un temps d'exposition **Ti** et une source de lumière, à allumer la source de lumière avant le début de l'exposition du capteur linéaire d'images, et à éteindre ladite source de lumière après la fin de l'exposition du capteur linéaire d'images.

Selon une variante de réalisation, le procédé consiste pour chaque acquisition d'une ligne d'image, avec un temps d'exposition **Ti** et une source de lumière, à allumer la source de lumière après le début de l'exposition du capteur linéaire d'image, et à éteindre ladite source de lumière avant la fin de l'exposition du capteur linéaire d'images.

Bien entendu, les conditions d'éclairage **Ek** peuvent rester identiques pour au moins certaines des lignes d'images prises. Dans cette hypothèse, le temps d'exposition **Ti** du capteur linéaire **2** varie pour au moins de telles lignes d'images pour lesquelles les conditions d'éclairage **Ek** sont identiques.

Ainsi, l'unité de contrôle et de traitement **2₃** permet de régler le temps d'exposition **Ti** du capteur linéaire **2** de manière à obtenir au moins deux lignes d'images avec des temps d'exposition **Ti** différents. Ainsi, il peut être obtenu au moins deux images de dynamique adaptée à des conditions d'éclairage différentes et/ou des caractéristiques de transmission ou de réflexion de l'emballage localement différentes. Selon une variante avantageuse de réalisation, le temps d'exposition **Ti** de deux lignes successives sont différents.

Dans l'exemple illustré à la **Fig. 3** pour un incrément de mouvement de l'emballage **1,** la séquence **S1** comporte successivement, une première ligne d'images **I1** prise avec un premier temps d'exposition **T1** et selon des premières conditions d'éclairage **E1,** une deuxième ligne d'images **I2** prise avec le premier temps d'exposition **T1** et selon des deuxièmes conditions d'éclairage **E2** différentes des premières conditions d'éclairage **E₁** et des lignes d'images successives jusqu'à une dernière ligne d'images **In** prise avec un temps d'exposition **Ti** et des conditions d'éclairage **Ek.** La séquence **S1** comporte ainsi successivement n lignes d'images **I1, I2,** ... **In.**

Pour un incrément de mouvement suivant, le procédé acquiert successivement à la première séquence **S1,** une deuxième séquence **S2** de n lignes d'images successives **I1, I2,** ... **In.** Chacune des lignes d'images **I1, I2, ... In** de cette deuxième séquence **S2** est obtenue avec un temps d'exposition et des conditions d'éclairage identiques obtenues lors de la première séquence **S₁**. Ainsi, pour la deuxième séquence **S2,** la première ligne d'images **I1** est obtenue avec le premier temps d'exposition **T1** et les premières conditions d'éclairage **E1** tandis que la deuxième ligne d'images **I2** est obtenue avec le premier temps d'exposition **T1** et les deuxièmes conditions d'éclairage **E2,** et ainsi de suite pour l'ensemble des autres lignes d'images de la deuxième séquence **S2.**

Dans l'exemple illustré, les lignes d'images de la deuxième séquence **S2** sont prises selon un cycle identique au cycle des lignes d'images prises dans la séquence **S1.** Il est à noter qu'il pourrait être prévu de choisir un cycle de lignes d'images différent d'une séquence à l'autre.

Ainsi, le procédé vise à acquérir cycliquement pour chaque incrément de mouvement, une séquence, c'est-à-dire pour j incréments de mouvements, un nombre j de séquences **S1, S2,** ... **Sj,** chaque séquence **S1, S2,** ... **Sj** comportant n lignes d'images successives **I1, I2,** ... **In.** Il est à noter que le nombre j de séquences **S1, S2,** ... **Sj** est choisi pour permettre la prise d'images linéaire couvrant la totalité de la zone d'inspection choisie.

Le procédé selon l'invention consiste ensuite à regrouper entre elles les lignes d'images **I1, I2,** ... **In** obtenues dans les diverses séquences **S1, S2, ... Sj** avec à la fois le même temps d'exposition **Ti** et les mêmes conditions d'éclairage **Ek** de manière à obtenir n images superposables **I1, I2,** ... **In.**

Ainsi, chaque image **I1, I2,** ... **In** comporte j lignes d'images obtenues pour chacune des images, avec un même temps d'exposition **Ti** et les mêmes conditions d'éclairage **Ek.** Ainsi, l'image **I1** est obtenue par le regroupement des premières lignes d'images **I1** provenant des diverses séquences **S1, S2,** ... **Sj.** De même, la deuxième image **I2** est obtenue par le regroupement des deuxièmes lignes d'images **I2** obtenues dans les différentes séquences **S1, S2,** ... **Sj.** D'une manière générale, une image **In** est réalisée par le regroupement des nièmes lignes d'images obtenues dans les différentes séquences **S1, S2,** ... **Sj.** L'ordre de regroupement des lignes d'images dans chaque image est identique pour toutes les images reconstituées dans le cas où les cycles de lignes d'images sont identiques pour les séquences **S1, S2,** ... **Sj.**

Ainsi, les images **I1, I2,** ... **In** présentent une dimension **D** égale au nombre j de séquences **S1, S2,** ... **Sj,** multiplié par la largeur de champ **L** du capteur linéaire d'images **2.** Cette dimension **D** qui est exprimée en nombre de pixels (D=Lxj) est adaptée pour englober au moins la zone d'inspection de l'emballage.

Il doit être considéré que les n images **I1, I2** ... **In** présentent un caractère superposable dans le sens où chaque pixel pris dans une image possède des coordonnées identiques aux pixels homologues pris dans les autres images. Une telle superposition des images est obtenue par la réalisation pour chaque incrément de mouvement, d'une série de lignes d'image, dans lesquelles une même zone de l'emballage apparaît. Bien que le mouvement relatif soit généralement continu, la fréquence d'acquisition des lignes d'image est suffisamment élevée, pour considérer que l'ensemble des lignes d'image **I1, I2** ... **In** d'une séquence sont toutes l'image d'une bande ou d'une zone de l'emballage **1.** Bien entendu, la vitesse d'acquisition des lignes d'images et le nombre de lignes d'image prises sont choisis en fonction de la vitesse de mouvement de l'emballage et de la résolution des images de manière à obtenir un caractère superposable des images. Il doit être considéré que les n images **I1, I2,... In** représentent un caractère superposable dans le sens où leur résolution spatiale est la même. Une telle superposition des images est obtenue par la réalisation pour chaque incrément de mouvement, d'une série de lignes d'images à une fréquence répétable.

Par ailleurs, il est à noter que les images **I1, I2,** ... **In** reconstituées présentent des temps d'exposition **Ti** différents entre les images et/ou des conditions d'éclairage **Ek** différentes également entre les images. Les temps d'exposition **TI** du capteur linéaire **2** et les conditions d'éclairage **Ek** de l'emballage **1** sont choisis en fonction des caractéristiques de l'emballage à déterminer et dont la mise en évidence dépend en particulier de la transmission et de la réflexion lumineuse de l'emballage. La réalisation d'images avec des temps d'exposition **Ti** différents et/ou selon des conditions d'éclairage **Ek** différentes permet, à l'aide d'un unique capteur linéaire d'images **2,** de mettre en évidence diverses caractéristiques spécifiques de l'emballage et avec une précision d'inspection homogène et optimale même lorsque l'emballage est réalisé en tout ou partie en matériaux translucides ou transparents.

Le procédé selon l'invention consiste ensuite à analyser de manière séparée ou en combinaison, les n images **I1, I2,** ... **In** afin de déterminer au moins une caractéristique des emballages à inspecter. Une analyse comparative des images **I1, I2,** ... **In** est d'autant plus facile à réaliser que de telles images sont superposables. Les caractéristiques déduites de cette analyse peuvent être des défauts par exemple, mis en évidence sur l'une et/ou l'autre des images prises.

Le procédé selon l'invention est mis en œuvre par le dispositif **I** d'inspection d'emballages **1.** A cet effet, le dispositif **I** comporte :
- des moyens pour régler le temps d'exposition **Ti** du capteur linéaire d'images **2,** de manière à obtenir des lignes d'images avec des temps d'exposition **Ti** différents entre les lignes, ces moyens de réglage étant interne ou externe au capteur **2,**
- des moyens pour modifier les conditions d'éclairages **EK** du système d'éclairage **3** pour obtenir des lignes d'images avec des conditions d'éclairage différentes entre les lignes, ces moyens de réglage étant interne ou externe au système d'éclairage **3.**

Le dispositif d'inspection **I** comporte également une unité **2₃** de contrôle et de traitement des images comportant :
∘ des moyens pour piloter les moyens de réglage du temps d'exposition **Ti,** les moyens de modification des conditions d'éclairage du système d'éclairage **3** et l'acquisition des images par le capteur linéaire d'images de manière à acquérir cycliquement pour chaque incrément de mouvement une séquence de n lignes d'images successives **I1, I2,** ... **In,** (avec n supérieur à 1), de manière à obtenir pour j incréments de mouvements, des séquences **S1, S2,** ... **Sj,** les n lignes d'images de chaque séquence étant obtenues avec des temps d'exposition **Ti** différents et/ou des conditions d'éclairage **Ek** différentes,
∘ des moyens pour regrouper entre elles les lignes d'images **I1, I2,** ... **In** obtenues dans les séquences avec à la fois le même temps d'exposition **Ti** et les mêmes conditions d'éclairage **Ek** de manière à obtenir n images superposables **I1, I2,** ... **In** d'au moins j lignes d'images, les images étant obtenues avec des temps d'exposition **Ti** différents et/ou dans des conditions d'éclairage **Ek** différentes,
∘ des moyens pour analyser séparément ou en combinaison les n images **I1, I2,** ... **In** afin de déterminer au moins une caractéristique du ou des emballages inspectés.

Selon une autre caractéristique avantageuse, le système d'éclairage **3** comporte au moins une source de lumière dont la durée d'éclairement est inférieure à la période de lecture du capteur linéaire d'images **2,** le rapport cyclique de l'éclairement de la source de lumière pouvant atteindre 50 %. Typiquement, pour un capteur linéaire d'images fonctionnant à 10 KHz, l'ordre de grandeur de la durée d'éclairement est inférieur à 100 µs.

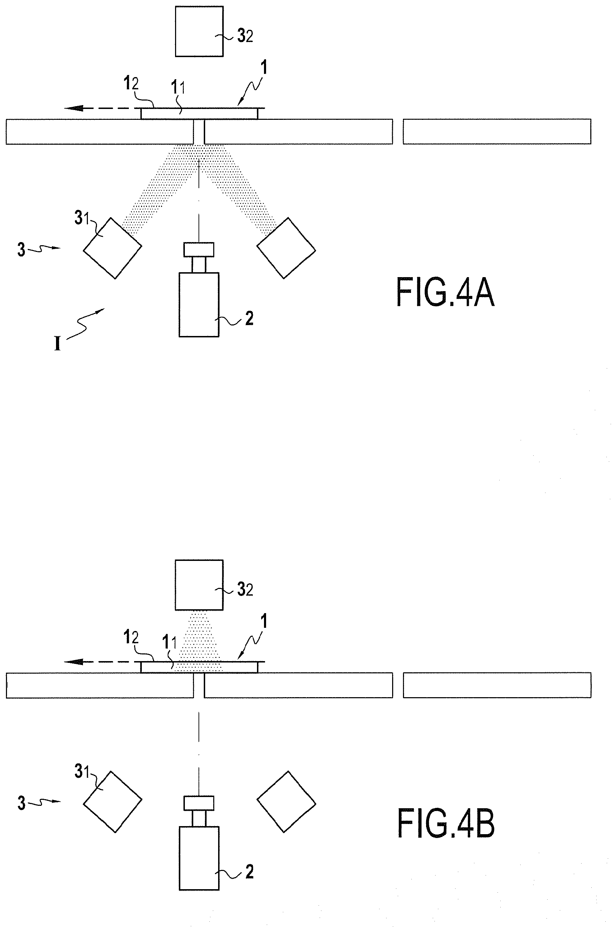

Les **Fig. 4A** et **4B** illustrent un exemple d'application selon l'invention du procédé d'inspection d'emballages **1** composés d'au moins une alvéole **1₁** de produits, fermée hermétiquement par thermoscellage au moyen d'un film **1₂.** Tel que cela ressort de ces **Figures,** cet emballage **1** ou barquette comporte généralement un rebord bordant la périphérie de chaque alvéole **1₁** et sur lequel est fixé par soudure, le film de fermeture **1₂.** Les soudures des emballages **1** sont contrôlées à l'aide d'un dispositif d'inspection optique **I** mettant en œuvre le procédé conforme à l'invention. Il est à noter que le film **1₂** peut être au moins localement opaque et fixé sur une barquette présentant un caractère transparent ou translucide. De même, le film **1₂** peut être transparent ou translucide et fixé sur une barquette présentant localement un caractère opaque ou transparent ou translucide.

Les emballages **1** sont amenés par tous moyens appropriés à défiler en translation devant un capteur linéaire d'images **2** selon une direction non parallèle à l'axe optique du capteur linéaire **2.** Dans l'exemple illustré, les emballages **1** sont convoyés avec le côté des alvéoles **1₁** dirigé vers le capteur linéaire **2.** En d'autres termes, le capteur linéaire **2** est placé en dessous des emballages de manière à contrôler l'emballage côté alvéole. Bien entendu, le capteur linéaire d'images **2** est disposé de manière que son champ de largeur **L** prise perpendiculairement au sens de défilement englobe l'alvéole de l'emballage pour contrôler les soudures du film. Si l'emballage comporte plusieurs alvéoles, alors le champ du capteur linéaire englobe ces alvéoles.

Le poste d'inspection **I** comporte en tant que système d'éclairage **3,** une première source de lumière **3₁** située du côté des alvéoles **1₁** c'est-à-dire au-dessous des emballages **1,** et une deuxième source de lumière **3₂** située côté film **1₂** c'est-à-dire au-dessus des emballages **1.**

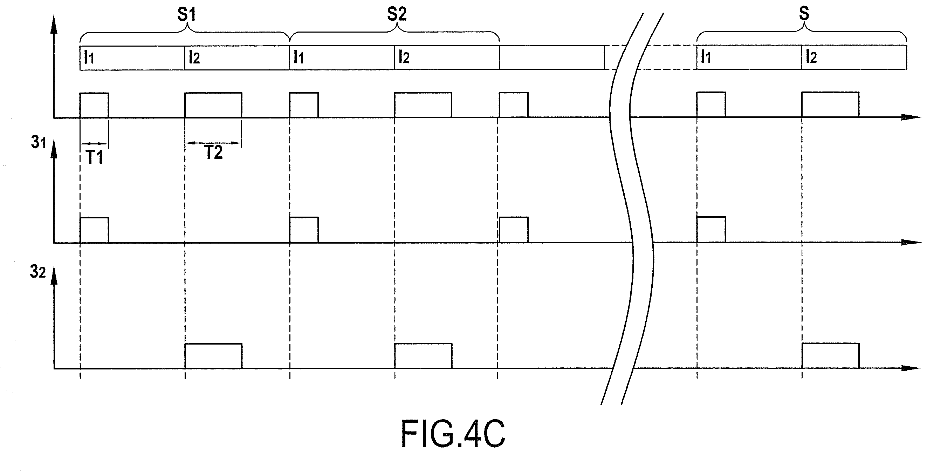

Conformément au procédé d'inspection décrit ci-dessus, le contrôle de tels emballages **1** consiste à acquérir à l'aide de capteur linéaire **2,** dans une première séquence et pour un incrément de déplacement :
- une première ligne d'image avec un premier temps d'exposition **T1** pour le capteur linéaire **2** et avec l'emballage **1** qui est éclairée uniquement avec la première source de lumière **3₁** (**Fig. 4A**, **4C**),
- une deuxième ligne d'image avec un deuxième temps d'exposition **(T₂)** pour le capteur linéaire **2,** souvent différent du premier temps d'exposition, et avec l'emballage **1** qui est éclairé uniquement avec la deuxième source de lumière **3₂** (**Fig. 4B**, **4C**).

Pour chaque incrément de déplacement successif, le procédé consiste à acquérir cycliquement, une séquence de cette première ligne d'images et de cette deuxième ligne d'images.

Le procédé consiste ensuite à regrouper entre elles, les premières lignes d'images de chaque séquence obtenues avec le premier temps d'exposition et la première source de lumière **3₁** de manière à reconstituer une image de dimension égale à jxL. Cette inspection en lumière réfléchie ou diffusée par la surface des emballages permet de déceler des défauts pour de telles conditions de réflexion.

Le procédé consiste également à regrouper entre elles, les deuxièmes lignes d'images de chaque séquence obtenues avec le deuxième temps d'exposition et la deuxième source de lumière **3₂** en vue de reconstituer une image de dimension égale à jxL. Cette inspection en lumière transmise ou diffusée à travers l'emballage permet de déceler des défauts pour de telles conditions de transmission.

Un tel procédé permet d'inspecter à l'aide d'un seul capteur linéaire d'images, des emballages présentant des caractéristiques optiques localement différentes. Une analyse séparée ou combinée des images reconstituées assure une inspection robuste. En particulier, le procédé selon l'invention permet de déterminer la qualité des soudures des emballages.

Bien entendu, il peut être envisagé d'acquérir pour chaque séquence, un nombre supérieur de lignes d'images. De même, il peut être avantageux d'acquérir des séquences différentes de lignes d'images pour des parties différentes de l'emballage qui présentent des caractéristiques optiques différentes entre elles. Ainsi, pour une première partie de l'emballage, le procédé vise à acquérir pour chaque séquence, les première et deuxième lignes d'image comme décrit ci-dessus. Pour une deuxième partie de l'emballage, le procédé vise à acquérir pour chaque séquence, la première ligne d'image et une deuxième ligne d'image obtenue avec un troisième temps d'exposition pour le capteur linéaire d'image **2** et avec une troisième source de lumière située du côté du capteur linéaire d'images **2** et présentant des conditions d'éclairage différentes de la deuxième source d'éclairage **3₂**.

Dans l'exemple illustré, le capteur linéaire d'images **2** est disposé du côté des alvéoles **1₁** mais il est bien clair que le capteur linéaire d'images **2** peut être disposé du côté du film **1₂**.

Selon l'exemple illustré aux **Fig. 4A** et **4B****,** le poste d'inspection comporte deux sources de lumières **3₁** et **3₂.** Il est à noter qu'il peut être envisagé un poste d'inspection **I** comportant une seule source de lumière pour inspecter des emballages composés d'au moins une alvéole contenant des produits et étant fermée hermétiquement par thermoscellage au moyen d'un film. Selon cette variante de réalisation, le dispositif d'inspection comporte :
- un capteur linéaire d'images situé du côté des alvéoles ou du côté du film de sorte que son champ de largeur pris perpendiculairement au sens de défilement, englobe une ou plusieurs alvéoles,
- une seule source de lumière située du côté opposé à la caméra par rapport aux emballages en défilement et éclairant l'emballage sur au moins le champ du capteur linéaire d'images,
- une unité de contrôle et de traitement assurant :
   ∘ pour la prise de la première ligne d'images des séquences, l'exposition du capteur pendant un premier temps d'exposition et l'activation de la source de lumière pendant ledit temps d'exposition,
   ∘ pour la prise de la deuxième ligne d'images des séquences, l'exposition du capteur pendant un deuxième temps d'exposition et l'activation de la source de lumière pendant ledit temps d'exposition.

L'invention n'est pas limitée aux exemples décrits et représentés car diverses modifications peuvent y être apportées sans sortir de son cadre.

## Revendications

1. Procédé d'inspection de la qualité des soudures présentées par des emballages **(1)** de produits à l'aide d'un capteur linéaire d'images **(2),** délivrant successivement des lignes d'images, les emballages étant composés d'au moins une alvéole **(1₁)** de produits, fermée hermétiquement par thermoscellage au moyen d'un film **(1₂),** les emballages étant réalisés en tout ou partie en matériaux translucides ou transparents et chaque emballage inspecté étant en mouvement relativement audit capteur et étant éclairé à l'aide d'au moins un système d'éclairage **(3),** le procédé étant **caractérisé en ce qu'**on :
• fait défiler les emballages inspectés en translation selon une direction non parallèle à l'axe optique du capteur linéaire d'images (2),
• dispose le capteur linéaire d'images (2) du côté des alvéoles ou du côté du film de sorte que son champ de largeur (L) prise perpendiculairement au sens de défilement, englobe une ou plusieurs alvéoles,
• acquiert cycliquement pour chaque incrément de mouvement, une séquence de n lignes d'images successives **(I1, I2,** ... **In),** (avec n supérieur à 1), de manière à obtenir pour j incréments de mouvements, des séquences **(S1, S2,** ... **Sj),** les n lignes d'images de chaque séquence étant obtenues avec des temps d'exposition **(Ti)** différents et/ou des conditions d'éclairage **(Ek)** différentes, en acquérant à l'aide du capteur linéaire **(2)** et avec en tant que système d'éclairage **(3)** une première source de lumière **(3₁)** située du côté des alvéoles **(1₁)** et une deuxième source de lumière **(3₂)** située côté film **(1),** dans une première séquence et pour un incrément de déplacement :
∘ une première ligne d'image avec un premier temps d'exposition (T1) pour le capteur linéaire (2) et avec l'emballage (1) qui est éclairée uniquement avec la première source de lumière (31) ;
∘ une deuxième ligne d'image avec un deuxième temps d'exposition (T2) pour le capteur linéaire (2), et avec l'emballage (1) qui est éclairé uniquement avec la deuxième source de lumière (32) ;
• regroupe entre elles les lignes d'images **(I1, I2,** ... **In)** obtenues dans les séquences avec à la fois le même temps d'exposition **(Ti)** et les mêmes conditions d'éclairage **(Ek)** de manière à obtenir n images superposables **(I1, I2,** ... **In)** d'au moins j lignes d'images, les images étant obtenues avec des temps d'exposition **(Ti)** différents et/ou dans des conditions d'éclairage **(Ek)** différentes,
analyse séparément ou en combinaison les n images **(I1, I2,** ... **In)** afin de déterminer au moins une caractéristique du ou des emballages inspectés

2. Procédé selon la revendication 1, **caractérisé en ce que** le nombre j de séquences acquises **(S1, S2,** ... **Sj)** permet de reconstituer n images différentes de dimension **(D)** égale au nombre j de séquences multiplié par la largeur **(L)** du champ du capteur, cette dimension étant adaptée de manière à englober au moins l'image d'un emballage, d'un ensemble d'emballages ou d'une région d'inspection faisant partie d'un emballage.

3. Procédé selon la revendication 1 ou 2, **caractérisé en ce que** dans chaque séquence **(S1, S2** ... **Sj)** de n lignes d'images **(I1, I2,** ... **In),** au moins deux lignes d'images sont obtenues avec des temps d'exposition **(Ti)** différents de manière à obtenir au moins deux images de dynamique adaptée à des conditions d'éclairage différentes et/ou à des caractéristiques différentes de transmission ou de réflexion de l'emballage.

4. Procédé selon l'une des revendications 1 à 3, **caractérisé en ce que** dans chaque séquence **(S1, S2,** ... **Sj)** de n lignes d'images **(I1, I2,** ... **In),** au moins deux lignes d'images sont obtenues dans des conditions d'éclairage **(Ek)** qui diffèrent par la puissance lumineuse instantanée, et/ou la durée d'éclairement, et/ou le spectre de longueur d'onde, et/ou l'état de polarisation, et/ou la position du système d'éclairage par rapport à l'emballage, et/ou la forme de la source de lumière du système d'éclairage, et/ou leur directivité et/ou leur caractère diffus et/ou leur homogénéité.

5. Procédé selon la revendication 1, **caractérisé en ce qu'**au moins une source lumineuse du système d'éclairage **(3)** est pilotée pour éclairer l'emballage **(1)** uniquement durant un temps strictement inférieur à l'inverse de la fréquence de lecture du capteur linéaire **(2).**

6. Procédé selon la revendication 3, **caractérisé en ce que** au moins une source lumineuse d'un système d'éclairage **(3)** est pilotée pour éclairer l'emballage **(1)** durant un temps d'exposition du capteur linéaire correspondant à une des n lignes d'images **(I1, I2,** ... **In)** de chaque séquence **(S1, S2,** ... **Sj).**

7. Procédé selon l'une des revendications 1 à 6, **caractérisé en ce qu'**il consiste pour chaque acquisition d'une ligne d'image, avec un temps d'exposition **(Ti)** et une source de lumière, à allumer la source de lumière avant le début de l'exposition du capteur linéaire d'images, à éteindre ladite source de lumière après la fin de l'exposition du capteur linéaire d'images.

8. Dispositif pour inspecter la qualité des soudures présentées par des emballages **(1)** contenant des produits et étant fermés hermétiquement par thermoscellage, les emballages étant réalisés en tout ou partie en matériaux translucides ou transparents et étant amenés à défiler devant un capteur linéaire d'images **(2),** délivrant successivement des lignes d'images, les emballages **(1)** étant composés d'au moins une alvéole contenant des produits et étant fermée hermétiquement par thermoscellage au moyen d'un film **(1₂)** et le capteur étant situé du côté des alvéoles ou du côté du film de sorte que son champ de largeur **(L),** pris perpendiculairement au sens de défilement, englobe une ou plusieurs alvéoles, le dispositif comportant au moins un système d'éclairage **(3)** permettant d'éclairer les emballages, avec, en tant que système d'éclairage **(3),** une première source de lumière **(3₁)** située du côté des alvéoles **(1₁)** et éclairant l'emballage sur au moins le champ du capteur linéaire d'images **(2)** et une deuxième source de lumière **(3₂)** située du côté du film (1₂), **caractérisé en ce qu'**il comporte :
• des moyens pour régler le temps d'exposition **(Ti)** du capteur linéaire d'images **(2),** à des valeurs différentes,
• des moyens pour régler les conditions d'éclairage **(EK)** du système d'éclairage **(3)** à des valeurs différentes,
• une unité **(2₃)** de contrôle et de traitement des images comportant :
∘ des moyens pour piloter les moyens de réglage du temps d'exposition **(Ti),** les moyens de modification des conditions d'éclairage du système d'éclairage **(3)** et l'acquisition des images par le capteur linéaire d'images de manière à acquérir cycliquement pour chaque incrément de mouvement une séquence de n lignes d'images successives **(I1, I2,** ... **In),** (avec n supérieur à 1), de manière à obtenir pour j incréments de mouvements, des séquences **(S1, S2,** ... **Sj),** les n lignes d'images de chaque séquence étant obtenues avec des temps d'exposition **(Ti)** différents et/ou des conditions d'éclairage **(Ek)** différentes,
∘ des moyens pour regrouper entre elles les lignes d'images **(I1, I2,** ... **In)** obtenues dans les séquences avec à la fois le même temps d'exposition **(Ti)** et les mêmes conditions d'éclairage **(Ek)** de manière à obtenir n images superposables **(I1, I2,** ... **In)** d'au moins j lignes d'images, les images étant obtenues avec des temps d'exposition **(Ti)** différents et/ou dans des conditions d'éclairage **(Ek)** différentes,
∘ des moyens pour analyser séparément ou en combinaison les n images **(I1, I2,** ... **In)** afin de déterminer au moins une caractéristique du ou des emballages inspectés
l'unité de contrôle et de traitement **(2₃)** assurant :
∘ pour la prise de la première ligne d'images des séquences, l'exposition du capteur **(2)** pendant un temps **(T1)** et l'activation uniquement de la première source de lumière **(3₁)** pendant ledit temps d'exposition **(T1),**
∘ pour la prise de la deuxième ligne d'images des séquences, l'exposition du capteur **(2)** pendant un temps **(T2)** et l'activation uniquement de la deuxième source de lumière **(3₂)** pendant ledit temps d'exposition **(T2).**

9. Dispositif selon la revendication 8, **caractérisé en ce qu'**un système d'éclairage **(3)** comporte au moins une source de lumière dont la durée d'éclairement est inférieure à la période de lecture du capteur linéaire d'images **(2),** le rapport cyclique de l'éclairement de la source de lumière pouvant atteindre 50 %.

10. Dispositif selon l'une des revendications 8 ou 9, **caractérisé en ce que** le système d'éclairage **(3)** comporte une troisième source de lumière située du côté du capteur linéaire d'images **(2)** et éclairant l'emballage sur au moins le champ du capteur linéaire **(2)** et **en ce que** l'unité de contrôle et de traitement **(2₃)** assure :
• pour une première partie de l'emballage, l'acquisition des séquences formées chacune de la première ligne d'image obtenue avec la première source lumineuse et la deuxième ligne d'image obtenue avec la deuxième source de lumière,
• pour une deuxième partie de l'emballage, l'acquisition des séquences formées chacune de la première ligne d'image obtenue avec la première source lumineuse et de la deuxième ligne d'image obtenue avec la troisième source de lumière, avec un temps d'exposition **(T3)** du capteur linéaire d'images **(2).**

11. Procédé d'inspection de la qualité des soudures présentées par des emballages **(1)** de produits à l'aide d'un capteur linéaire d'images **(2),** délivrant successivement des lignes d'images, les emballages étant réalisés en tout ou partie en matériaux translucides ou transparents et chaque emballage inspecté étant en mouvement relativement audit capteur et étant éclairé à l'aide d'au moins un système d'éclairage **(3),** les emballages **(1)** étant composés d'au moins une alvéole contenant des produits et étant fermée hermétiquement par thermoscellage au moyen d'un film **(1₂),** le procédé étant **caractérisé en ce qu'**on :
• déplace les emballages inspectés en translation selon une direction non parallèle à l'axe optique du capteur linéaire d'images **(2),**
• dispose le capteur linéaire d'images **(2)** du côté des alvéoles ou du côté du film de sorte que son champ de largeur **(L)** prise perpendiculairement au sens de défilement, englobe une ou plusieurs alvéoles,
• acquiert cycliquement pour chaque incrément de mouvement, une séquence de n lignes d'images successives **(I1, I2,** ... **In),** (avec n supérieur à 1), de manière à obtenir pour j incréments de mouvements, des séquences **(S1, S2,** ... **Sj),** les n lignes d'images de chaque séquence étant obtenues avec des temps d'exposition **(Ti)** différents et/ou des conditions d'éclairage **(Ek)** différentes, en acquérant, pour chaque séquence, une première ligne d'image avec un premier temps d'exposition, en activant une première source de lumière (3₁) située du côté des alvéoles (1₁), puis une deuxième ligne d'images avec un deuxième temps d'exposition, en activant une deuxième source de lumière (3₂) située du côté du film,
• regroupe entre elles les lignes d'images **(I1, I2,** ... **In)** obtenues dans les séquences avec à la fois le même temps d'exposition **(Ti)** et les mêmes conditions d'éclairage **(Ek)** de manière à obtenir n images superposables **(I1, I2,** ... **In)** d'au moins j lignes d'images, les images étant obtenues avec des temps d'exposition **(Ti)** différents et/ou dans des conditions d'éclairage **(Ek)** différentes, en regroupant entre elles les premières lignes d'images de chaque séquence, de manière à obtenir une première image de dimensions **(jxL)** pour effectuer une inspection en lumière réfléchie ou diffusée par la surface des emballages, ou diffusée par l'emballage, et en regroupant entre elles les deuxièmes lignes d'images de chaque séquence, de manière à obtenir une deuxième image de dimensions **(jxL)** pour effectuer une inspection en lumière transmise ou diffusée dans la matière des emballages,
• analyse séparément ou en combinaison les n images **(I1, I2,** ... **In)** afin de déterminer au moins une caractéristique du ou des emballages inspectés,
**en ce qu'**il consiste à acquérir les séquences formées chacune d'une première ligne d'image et d'une deuxième ligne d'images, pour une première partie de l'emballage, et **en ce qu'**il consiste pour la deuxième partie de l'emballage, à acquérir des séquences comportant chacune, la première ligne d'image et une deuxième ligne d'image obtenue avec un troisième temps d'exposition et en activant une troisième source de lumière située du côté du capteur linéaire.

12. Dispositif pour inspecter la qualité des soudures présentées par des emballages **(1)** composés d'au moins une alvéole contenant des produits et étant fermée hermétiquement par thermoscellage au moyen d'un film, les emballages étant réalisés en tout ou partie en matériaux translucides ou transparents et étant amenés à défiler devant un capteur linéaire d'images **(2),** délivrant successivement des lignes d'images, le dispositif comportant au moins un système d'éclairage **(3)** permettant d'éclairer les emballages, **caractérisé en ce qu'**il comporte :
• des moyens pour régler le temps d'exposition **(Ti)** du capteur linéaire d'images **(2),** à des valeurs différentes,
• des moyens pour régler les conditions d'éclairage **(EK)** du système d'éclairage **(3)** à des valeurs différentes,
• une unité **(2₃)** de contrôle et de traitement des images comportant :
∘ des moyens pour piloter les moyens de réglage du temps d'exposition **(Ti),** les moyens de modification des conditions d'éclairage du système d'éclairage **(3)** et l'acquisition des images par le capteur linéaire d'images de manière à acquérir cycliquement pour chaque incrément de mouvement une séquence de n lignes d'images successives **(I1, I2,** ... **In),** (avec n supérieur à 1), de manière à obtenir pour j incréments de mouvements, des séquences **(S1, S2,** ... **Sj),** les n lignes d'images de chaque séquence étant obtenues avec des temps d'exposition **(Ti)** différents pour des conditions d'éclairage identiques,
∘ des moyens pour regrouper entre elles les lignes d'images **(I1, I2,** ... **In)** obtenues dans les séquences avec à la fois le même temps d'exposition **(Ti)** et les mêmes conditions d'éclairage **(Ek)** de manière à obtenir n images superposables **(I1, I2,** ... **In)** d'au moins j lignes d'images, les images étant obtenues avec des temps d'exposition **(Ti)** différents pour des conditions d'éclairage identiques,
∘ des moyens pour analyser séparément ou en combinaison les n images **(I1, I2,** ... **In)** afin de déterminer au moins une caractéristique du ou des emballages inspectés,
et **en ce qu'**il comporte un dispositif comportant :
• un capteur linéaire d'images situé du côté des alvéoles ou du côté du film de sorte que son champ de largeur pris perpendiculairement au sens de défilement, englobe une ou plusieurs alvéoles,
• en tant que système d'éclairage, une source de lumière située du côté opposé à la caméra par rapport aux emballages en défilement et éclairant l'emballage sur au moins le champ du capteur linéaire d'images,
• une unité de contrôle et de traitement assurant :
∘ pour la prise de la première ligne d'images des séquences, l'exposition du capteur pendant un premier temps d'exposition et l'activation de la source de lumière pendant ledit temps d'exposition,
∘ pour la prise de la deuxième ligne d'images des séquences, l'exposition du capteur pendant un deuxième temps d'exposition différent, pour des conditions d'éclairage identiques, et l'activation de la source de lumière pendant ledit temps d'exposition.

13. Dispositif selon la revendication 12, **caractérisé en ce que** le système d'éclairage **(3)** comporte au moins une source de lumière dont la durée d'éclairement est inférieure à la période de lecture du capteur linéaire d'images **(2),** le rapport cyclique de l'éclairement de la source de lumière pouvant atteindre 50 %.

14. Procédé d'inspection de la qualité des soudures présentées par des emballages **(1)** de produits, thermoscellés, les emballages étant réalisés en tout ou partie en matériaux translucides ou transparents, à l'aide d'un capteur linéaire d'images **(2),** délivrant successivement des lignes d'images, chaque emballage inspecté étant en mouvement relativement audit capteur et étant éclairé à l'aide d'au moins un système d'éclairage **(3),** le procédé étant **caractérisé en ce qu'**on :
• acquiert cycliquement pour chaque incrément de mouvement, une séquence de n lignes d'images successives **(I1, I2,** ... **In),** (avec n supérieur à 1), de manière à obtenir pour j incréments de mouvements, des séquences **(S1, S2,** ... **Sj),** les n lignes d'images de chaque séquence étant obtenues avec des temps d'exposition **(Ti)** différents pour des conditions d'éclairage identiques,
• regroupe entre elles les lignes d'images **(I1, I2,** ... **In)** obtenues dans les séquences avec à la fois le même temps d'exposition **(Ti)** et les mêmes conditions d'éclairage **(Ek)** de manière à obtenir n images superposables **(I1, I2,** ... **In)** d'au moins j lignes d'images, les images étant obtenues avec des temps d'exposition **(Ti)** différents pour des conditions d'éclairage identiques,
• analyse séparément ou en combinaison les n images **(I1, I2,** ... **In)** afin de déterminer au moins une caractéristique du ou des emballages inspectés,
et **en ce que** dans chaque séquence **(S1, S2** ... **Sj)** de n lignes d'images **(I1, I2,** ... **In),** au moins deux lignes d'images sont obtenues avec des temps d'exposition (Ti) différents pour des conditions d'éclairage identiques de manière à obtenir au moins deux images de dynamique adaptée à des caractéristiques différentes de transmission ou de réflexion de l'emballage.

## Patentansprüche

1. Verfahren zum Prüfen der Qualität der Schweißnähte von Produktverpackungen (1) mittels eines linearen Bildsensors (2), der nacheinander Bildzeilen liefert, wobei die Verpackungen aus mindestens einer Produktzelle (1₁) bestehen, die durch Heißsiegeln mittels einer Folie (1₂) hermetisch verschlossen ist, wobei die Verpackungen ganz oder teilweise aus lichtdurchlässigen oder transparenten Materialien bestehen und jede geprüfte Verpackung relativ zu diesem Sensor in Bewegung ist und mittels mindestens eines Beleuchtungssystems (3) beleuchtet wird, wobei das Verfahren **dadurch gekennzeichnet ist, dass**:
• die geprüften Verpackungen translatorisch in einer Richtung vorbeilaufen gelassen werden, die nicht parallel zur optischen Achse des linearen Bildsensors (2) verläuft,
• der lineare Bildsensor (2) auf der Seite der Zellen oder auf der Seite der Folie so angeordnet wird, dass sein Feld der Breite (L) senkrecht zur Laufrichtung eine oder mehrere Zellen umfasst,
• eine Sequenz von n aufeinanderfolgenden Bildzeilen (I1, I2, ..., In) (mit n größer als 1) zyklisch für jedes Bewegungsinkrement erfasst wird, um Sequenzen (S1, S2, ..., Sj) für j Bewegungsinkremente zu erhalten, wobei die n Bildzeilen jeder Sequenz mit unterschiedlichen Belichtungszeiten (Ti) und/oder unterschiedlichen Beleuchtungsbedingungen (Ek) erhalten werden, indem mittels des linearen Sensors (2) und mit einer ersten Lichtquelle (3₁), die sich auf der Seite der Zellen (1₁) befindet, und einer zweiten Lichtquelle (3₂), die sich auf der Seite der Folie (1) befindet, als Beleuchtungssystem (3) in einer ersten Sequenz und für ein Bewegungsinkrement Folgendes erfasst wird:
∘ eine erste Bildzeile mit einer ersten Belichtungszeit (T1) für den linearen Sensor (2) und mit der Verpackung (1), die nur mit der ersten Lichtquelle (31) beleuchtet wird;
∘ eine zweite Bildzeile mit einer zweiten Belichtungszeit (T2) für den linearen Sensor (2), und mit der Verpackung (1), die nur mit der zweiten Lichtquelle (32) beleuchtet wird;
• die in den Sequenzen mit gleicher Belichtungszeit (Ti) und gleichen Beleuchtungsbedingungen (Ek) erhaltenen Bildzeilen (I1, I2, ..., In) so zueinander gruppiert werden, dass n deckungsgleiche Bilder (I1, I2, ..., In) von mindestens j Bildzeilen erhalten werden, wobei die Bilder mit unterschiedlichen Belichtungszeiten (Ti) und/oder unter unterschiedlichen Beleuchtungsbedingungen (Ek) erhalten werden, die n Bilder (I1, I2, ..., In) einzeln oder in Kombination analysiert werden, um mindestens ein Merkmal der geprüften Verpackung(en) zu bestimmen.

2. Verfahren gemäß Anspruch 1, **dadurch gekennzeichnet, dass** die Anzahl j der erfassten Sequenzen (S1, S2, ..., Sj) es ermöglicht, n verschiedene Bilder, deren Größe (D) gleich der Anzahl j der Sequenzen multipliziert mit der Breite (L) des Sensorfeldes ist, zu rekonstruieren, wobei diese Größe so angepasst ist, dass sie zumindest das Bild einer Verpackung, einer Gruppe von Verpackungen oder eines Prüfbereichs, der Teil einer Verpackung ist, umfasst.

3. Verfahren gemäß Anspruch 1 oder 2, **dadurch gekennzeichnet, dass** in jeder Sequenz (S1, S2, ..., Sj) von n Bildzeilen (I1, I2, ..., In) mindestens zwei Bildzeilen mit unterschiedlichen Belichtungszeiten (Ti) erhalten werden, sodass mindestens zwei dynamische Bilder erhalten werden, die an unterschiedliche Beleuchtungsbedingungen und/oder unterschiedliche Durchlässigkeits- oder Reflexionseigenschaften der Verpackung angepasst sind.

4. Verfahren gemäß einem der Ansprüche 1 bis 3, **dadurch gekennzeichnet, dass** in jeder Sequenz (S1, S2, ..., Sj) von n Bildzeilen (I1, I2, ..., In) mindestens zwei Bildzeilen unter Beleuchtungsbedingungen (Ek) erhalten werden, die sich hinsichtlich der momentanen Lichtleistung und/oder der Beleuchtungsdauer und/oder des Wellenlängenspektrums und/oder des Polarisationszustandes und/oder der Position des Beleuchtungssystems relativ zur Verpackung und/oder der Form der Lichtquelle des Beleuchtungssystems und/oder ihrer Direktivität und/oder ihrer Diffusität und/oder ihrer Homogenität unterscheiden.

5. Verfahren gemäß Anspruch 1, **dadurch gekennzeichnet, dass** mindestens eine Lichtquelle des Beleuchtungssystems (3) so gesteuert wird, dass sie die Verpackung (1) nur für eine Zeitdauer beleuchtet, die deutlich geringer ist als die Umkehrung der Abtastfrequenz des linearen Sensors (2).

6. Verfahren nach Anspruch 3, **dadurch gekennzeichnet, dass** mindestens eine Lichtquelle eines Beleuchtungssystems (3) so gesteuert wird, dass sie die Verpackung (1) während einer Belichtungszeit des linearen Sensors beleuchtet, die einer der n Bildzeilen (I1, I2, ..., In) jeder Sequenz (S1, S2, ..., Sj) entspricht.

7. Verfahren gemäß einem der Ansprüche 1 bis 6, **dadurch gekennzeichnet, dass** es darin besteht, für jede Erfassung einer Bildzeile mit einer Belichtungszeit (Ti) und einer Lichtquelle die Lichtquelle vor Beginn der Belichtung des linearen Bildsensors einzuschalten und die Lichtquelle nach dem Ende der Belichtung des linearen Bildsensors auszuschalten.

8. Vorrichtung zum Prüfen der Qualität der Schweißnähte von Verpackungen (1), die Produkte enthalten und durch Heißsiegeln hermetisch verschlossen sind, wobei die Verpackungen ganz oder teilweise aus lichtdurchlässigen oder transparenten Materialien bestehen und vor einem linearen Bildsensor (2) vorbeilaufen, der nacheinander Bildzeilen liefert, wobei die Verpackungen (1) aus mindestens einer Zelle bestehen, die Produkte enthält und durch Heißsiegeln mittels einer Folie (1₂) hermetisch verschlossen ist, und der Sensor auf der Seite der Zellen oder auf der Seite der Folie angeordnet ist, so dass sein Feld mit der Breite (L), senkrecht zur Laufrichtung, eine oder mehrere Zellen umfasst, wobei die Vorrichtung mindestens ein Beleuchtungssystem (3) umfasst, mit dem die Verpackungen beleuchtet werden können, wobei als Beleuchtungssystem (3) eine erste Lichtquelle (3₁), die sich auf der Seite der Zellen (1₁) befindet und die Verpackung zumindest über das Feld des linearen Bildsensors (2) beleuchtet, und eine zweite Lichtquelle (3₂), die sich auf der Seite der Folie (1₂) befindet, vorhanden sind, **dadurch gekennzeichnet, dass** sie Folgendes umfasst:
• Mittel zum Einstellen der Belichtungszeit (Ti) des linearen Bildsensors (2) auf unterschiedliche Werte,
• Mittel zum Einstellen der Beleuchtungsbedingungen (EK) des Beleuchtungssystems (3) auf unterschiedliche Werte,
• eine Einheit (2₃) zur Bildsteuerung und -verarbeitung, umfassend:
∘ Mittel zum Steuern der Mittel zum Einstellen der Belichtungszeit (Ti), der Mittel zum Modifizieren der Beleuchtungsbedingungen des Beleuchtungssystems (3) und der Bilderfassung durch den linearen Bildsensor, sodass eine Sequenz von n aufeinanderfolgenden Bildzeilen (I1, I2, ..., In) (mit n größer als 1) zyklisch für jedes Bewegungsinkrement erfasst wird, um Sequenzen (S1, S2, ..., Sj) für j Bewegungsinkremente zu erhalten, wobei die n Bildzeilen jeder Sequenz mit unterschiedlichen Belichtungszeiten (Ti) und/oder unterschiedlichen Beleuchtungsbedingungen (Ek) erhalten werden,
∘ Mittel zum Gruppieren der in den Sequenzen mit gleicher Belichtungszeit (Ti) und gleichen Beleuchtungsbedingungen (Ek) erhaltenen Bildzeilen (I1, I2, ..., In), sodass n deckungsgleiche Bilder (I1, I2, ..., In) von mindestens j Bildzeilen erhalten werden, wobei die Bilder mit unterschiedlichen Belichtungszeiten (Ti) und/oder unter unterschiedlichen Beleuchtungsbedingungen (Ek) erhalten werden,
∘ Mittel zum Analysieren der n Bilder (I1, I2 ..., In) einzeln oder in Kombination, um mindestens ein Merkmal der geprüften Verpackung(en) zu bestimmen,
wobei die Steuer- und Verarbeitungseinheit (2₃) Folgendes gewährleistet:
∘ zum Aufnehmen der ersten Bildzeile der Sequenzen, Belichten des Sensors (2) für eine Zeit (T1) und Aktivieren nur der ersten Lichtquelle (3₁) während der Belichtungszeit (T1),
∘ zum Aufnehmen der zweiten Bildzeile der Sequenzen, Belichten des Sensors (2) für eine Zeit (T2) und Aktivieren nur der zweiten Lichtquelle (3₂) während der Belichtungszeit (T2).

9. Vorrichtung gemäß Anspruch 8, **dadurch gekennzeichnet, dass** ein Beleuchtungssystem (3) mindestens eine Lichtquelle umfasst, deren Beleuchtungsdauer geringer ist als die Abtastdauer des linearen Bildsensors (2), wobei das Beleuchtungs-Tastverhältnis der Lichtquelle bis zu 50 % beträgt.

10. Vorrichtung gemäß einem der Ansprüche 8 oder 9, **dadurch gekennzeichnet, dass** das Beleuchtungssystem (3) eine dritte Lichtquelle umfasst, die auf der Seite des linearen Bildsensors (2) angeordnet ist und die Verpackung zumindest über das Feld des linearen Sensors (2) beleuchtet, und dass die Steuer- und Verarbeitungseinheit (2₃) Folgendes gewährleistet:
• für einen ersten Teil der Verpackung, Erfassen der Sequenzen, die jeweils aus der mit der ersten Lichtquelle erhaltenen ersten Bildzeile und der mit der zweiten Lichtquelle erhaltenen zweiten Bildzeile gebildet werden,
• für einen zweiten Teil der Verpackung, Erfassen der Sequenzen, die jeweils aus der mit der ersten Lichtquelle erhaltenen ersten Bildzeile und der mit der dritten Lichtquelle erhaltenen zweiten Bildzeile gebildet werden, mit einer Belichtungszeit (T3) des linearen Bildsensors (2).

11. Verfahren zum Prüfen der Qualität der Schweißnähte von Produktverpackungen (1) mittels eines linearen Bildsensors (2), der nacheinander Bildzeilen liefert, wobei die Verpackungen ganz oder teilweise aus lichtdurchlässigen oder transparenten Materialien bestehen und jede geprüfte Verpackung relativ zu diesem Sensor in Bewegung ist und mittels mindestens eines Beleuchtungssystems (3) beleuchtet wird, wobei die Verpackungen (1) aus mindestens einer Zelle bestehen, die Produkte enthält und durch Heißsiegeln mittels einer Folie (1₂) hermetisch verschlossen ist, wobei das Verfahren **dadurch gekennzeichnet ist, dass**:
• die geprüften Verpackungen translatorisch in einer Richtung bewegt werden, die nicht parallel zur optischen Achse des linearen Bildsensors (2) verläuft,
• der lineare Bildsensor (2) auf der Seite der Zellen oder auf der Seite der Folie so angeordnet wird, dass sein Feld der Breite (L) senkrecht zur Laufrichtung eine oder mehrere Zellen umfasst,
• eine Sequenz von n aufeinanderfolgenden Bildzeilen (I1, I2, ..., In) (mit n größer als 1) zyklisch für jedes Bewegungsinkrement erfasst wird, um Sequenzen (S1, S2, ..., Sj) für j Bewegungsinkremente zu erhalten, wobei die n Bildzeilen jeder Sequenz mit unterschiedlichen Belichtungszeiten (Ti) und/oder unterschiedlichen Beleuchtungsbedingungen (Ek) erhalten werden, indem für jede Sequenz eine erste Bildzeile mit einer ersten Belichtungszeit erfasst wird, indem eine erste Lichtquelle (3₁) aktiviert wird, die sich auf der Seite der Zellen (1₁) befindet, und dann eine zweite Bildzeile mit einer zweiten Belichtungszeit erfasst wird, indem eine zweite Lichtquelle (3₂) aktiviert wird, die sich auf der Seite der Folie befindet,
• die in den Sequenzen mit gleicher Belichtungszeit (Ti) und gleichen Beleuchtungsbedingungen (Ek) erhaltenen Bildzeilen (I1, I2, ..., In) so zueinander gruppiert werden, dass n deckungsgleiche Bilder (I1, I2, ..., In) von mindestens j Bildzeilen erhalten werden, wobei die Bilder mit unterschiedlichen Belichtungszeiten (Ti) und/oder unter unterschiedlichen Beleuchtungsbedingungen (Ek) erhalten werden, indem die ersten Bildzeilen jeder Sequenz so zueinander gruppiert werden, dass ein erstes Bild mit den Abmessungen (jxL) erhalten wird, um eine Prüfung in reflektiertem oder gestreutem Licht durch die Oberfläche der Verpackungen oder gestreut durch die Verpackung durchzuführen, und indem die zweiten Bildzeilen jeder Sequenz so zueinander gruppiert werden, dass ein zweites Bild mit den Abmessungen (jxL) erhalten wird, um eine Prüfung in durchgelassenem oder gestreutem Licht in dem Material der Verpackungen durchzuführen,
• die n Bilder (I1, I2, ..., In) einzeln oder in Kombination analysiert werden, um mindestens ein Merkmal der geprüften Verpackung(en) zu bestimmen, und dadurch, dass es darin besteht, die jeweils aus einer ersten Bildzeile und einer zweiten Bildzeile gebildeten Sequenzen für einen ersten Teil der Verpackung zu erfassen, und dass es für den zweiten Teil der Verpackung darin besteht, Sequenzen zu erfassen, die jeweils die erste Bildzeile und eine zweite Bildzeile umfassen, die mit einer dritten Belichtungszeit und durch Aktivieren einer dritten Lichtquelle, die sich auf der Seite des linearen Sensors befindet, erhalten wurde.

12. Vorrichtung zum Prüfen der Qualität der Schweißnähte von Verpackungen (1), die aus mindestens einer Zelle bestehen, die Produkte enthält und durch Heißsiegeln mit einer Folie hermetisch verschlossen ist, wobei die Verpackungen ganz oder teilweise aus lichtdurchlässigen oder transparenten Materialien bestehen und vor einem linearen Bildsensor (2) vorbeilaufen, der nacheinander Bildzeilen liefert, wobei die Vorrichtung mindestens ein Beleuchtungssystem (3) umfasst, mit dem die Verpackungen beleuchtet werden können, **dadurch gekennzeichnet, dass** sie Folgendes umfasst:
• Mittel zum Einstellen der Belichtungszeit (Ti) des linearen Bildsensors (2) auf unterschiedliche Werte,
• Mittel zum Einstellen der Beleuchtungsbedingungen (EK) des Beleuchtungssystems (3) auf unterschiedliche Werte,
• eine Einheit (2₃) zur Bildsteuerung und -verarbeitung, umfassend:
∘ Mittel zum Steuern der Mittel zum Einstellen der Belichtungszeit (Ti), der Mittel zum Modifizieren der Beleuchtungsbedingungen des Beleuchtungssystems (3) und der Bilderfassung durch den linearen Bildsensor, sodass eine Sequenz von n aufeinanderfolgenden Bildzeilen (I1, I2, ..., In) (mit n größer als 1) zyklisch für jedes Bewegungsinkrement erfasst wird, um Sequenzen (S1, S2, ..., Sj) für j Bewegungsinkremente zu erhalten, wobei die n Bildzeilen jeder Sequenz mit unterschiedlichen Belichtungszeiten (Ti) bei identischen Beleuchtungsbedingungen erhalten werden,
∘ Mittel zum Gruppieren der in den Sequenzen mit gleicher Belichtungszeit (Ti) und gleichen Beleuchtungsbedingungen (Ek) erhaltenen Bildzeilen (I1, I2, ..., In), sodass n deckungsgleiche Bilder (I1, I2, ..., In) von mindestens j Bildzeilen erhalten werden, wobei die Bilder mit unterschiedlichen Belichtungszeiten (Ti) bei identischen Beleuchtungsbedingungen erhalten werden,
∘ Mittel zum Analysieren der n Bilder (I1, I2, ..., In) einzeln oder in Kombination, um mindestens ein Merkmal der geprüften Verpackung(en) zu bestimmen,
und dass sie eine Vorrichtung umfasst, umfassend:
• einen linearen Bildsensor, der auf der Seite der Zellen oder auf der Seite der Folie so angeordnet ist, dass sein Feld der Breite senkrecht zur Laufrichtung eine oder mehrere Zellen umfasst,
• als Beleuchtungssystem eine Lichtquelle, die sich auf der der Kamera gegenüberliegenden Seite bezüglich der vorbeilaufenden Verpackungen befindet und die Verpackung zumindest über das Feld des linearen Bildsensors beleuchtet,
• eine Steuer- und Verarbeitungseinheit, die Folgendes gewährleistet:
∘ zum Aufnehmen der ersten Bildzeile der Sequenzen, Belichten des Sensors für eine erste Belichtungszeit und Aktivieren der Lichtquelle während der Belichtungszeit,
∘ zum Aufnehmen der zweiten Bildzeile der Sequenzen, Belichten des Sensors für eine zweite unterschiedliche Belichtungszeit bei identischen Beleuchtungsbedingungen und Aktivieren der Lichtquelle während der Belichtungszeit,

13. Vorrichtung gemäß Anspruch 12, **dadurch gekennzeichnet, dass** ein Beleuchtungssystem (3) mindestens eine Lichtquelle umfasst, deren Beleuchtungsdauer geringer ist als die Abtastdauer des linearen Bildsensors (2), wobei das Beleuchtungs-Tastverhältnis der Lichtquelle bis zu 50 % beträgt.

14. Verfahren zum Prüfen der Qualität der Schweißnähte von heißgesiegelten Produktverpackungen (1), wobei die Verpackungen ganz oder teilweise aus lichtdurchlässigen oder transparenten Materialien bestehen, mittels eines linearen Bildsensors (2), der nacheinander Bildzeilen liefert, wobei jede geprüfte Verpackung relativ zu diesem Sensor in Bewegung ist und mittels mindestens eines Beleuchtungssystems (3) beleuchtet wird, wobei das Verfahren **dadurch gekennzeichnet ist, dass**:
• eine Sequenz von n aufeinanderfolgenden Bildzeilen (I1, I2, ..., In) (mit n größer als 1) zyklisch für jedes Bewegungsinkrement erfasst wird, um Sequenzen (S1, S2, ..., Sj) für j Bewegungsinkremente zu erhalten, wobei die n Bildzeilen jeder Sequenz mit unterschiedlichen Belichtungszeiten (Ti) bei identischen Beleuchtungsbedingungen erhalten werden,
• die in den Sequenzen mit gleicher Belichtungszeit (Ti) und gleichen Beleuchtungsbedingungen (Ek) erhaltenen Bildzeilen (I1, I2, ..., In) so zueinander gruppiert werden, dass n deckungsgleiche Bilder (I1, I2, ..., In) von mindestens j Bildzeilen erhalten werden, wobei die Bilder mit unterschiedlichen Belichtungszeiten (Ti) bei identischen Beleuchtungsbedingungen erhalten werden,
• die n Bilder (I1, I2 ..., In) einzeln oder in Kombination analysiert werden, um mindestens ein Merkmal der geprüften Verpackung(en) zu bestimmen, und dass in jeder Sequenz (S1, S2 ... Sj) von n Bildzeilen (I1, I2, ..., In) mindestens zwei Bildzeilen mit unterschiedlichen Belichtungszeiten (Ti) für identische Beleuchtungsbedingungen erhalten werden, so dass mindestens zwei dynamische Bilder erhalten werden, die an unterschiedliche Durchlässigkeits- oder Reflexionseigenschaften der Verpackung angepasst sind.

## Claims

1. A method for inspecting the quality of the welds presented by product packages (1) using a linear image sensor (2), successively delivering lines of images, the packages being made up of at least one product cell (1₁), hermetically sealed by heat sealing using a film (1₂), the packages being made in whole or in part of translucent or transparent materials and each inspected package being in motion relative to said sensor and being illuminated using at least one lighting system (3), the method being **characterized in that** one:
• translates the inspected packages in a direction not parallel to the optical axis of the linear image sensor (2),
• arranges the linear image sensor (2) next to the cells or next to the film such that its field of width (L) considered perpendicular to the direction of movement encompasses one or several cells,
• acquires cyclically, for each movement increment, a sequence of n successive lines of images (I1, 12, ... In) (with n greater than 1), so as to obtain, for j movement increments, sequences (S1, S2, ... Sj), the n lines of images of each sequence being obtained with different exposure times (Ti) and/or different lighting conditions (Ek), by acquiring using the linear sensor (2) and with, as lighting system (3), a first light source (3₁) located on the cell side (1₁) and a second light source (3₂) located on the film side (1), in a first sequence and for a movement increment:
∘ a first line of images with a first exposure time (T1) for the linear sensor (2) and with the package (1) illuminated only with the first light source (31);
∘ a second line of images with a second exposure time (T2) for the linear sensor (2), and with the package (1) illuminated only with the second light source (32);
• groups together the obtained lines of images (I1, 12, ... In) in the sequences with both the same exposure time (Ti) and the same lighting conditions (Ek) so as to obtain n superimposable images (II, 12, ... In) with at least j lines of images, the images being obtained with different exposure times (Ti) and/or different lighting conditions (Ek), analyzes, separately or in combination, the n images (I1, 12, ... In) in order to determine at least one characteristic of the inspected package(s).

2. The method according to claim 1, **characterized in that** the number j of acquired sequences (S1, S2,... Sj) makes it possible to reconstitute n different images of dimension (D) equal to the number j of sequences multiplied by the width (L) of the field of the sensor, this dimension being adapted so as to encompass at least the image of a package, a set of packages or an inspection region belonging to a package.

3. The method according to claim 1 or 2, **characterized in that** in each sequence (S1, S2... Sj) of n lines of images (11, 12,... In), at least two lines of images are obtained with different exposure times (Ti) so as to obtain at least two images with dynamics adapted to different lighting conditions and/or to different transmission or reflection characteristics of the package.

4. The method according to one of claims 1 to 3, **characterized in that** in each sequence (S1, S2,... Sj) of n lines of images (I1, I2,... In), at least two lines of images are obtained under lighting conditions (Ek) that differ by the instantaneous illumination power, and/or the lighting duration, and/or the wavelength spectrum, and/or the polarization state, and/or the position of the lighting system relative to the package, and/or the shape of the light source of the lighting system, and/or their directivity and/or their diffuse nature and/or their homogeneity.

5. The method according to claim 1, **characterized in that** at least one light source of the lighting system (3) is controlled to illuminate the package (1) only during a time strictly shorter than the inverse of the reading frequency of the linear sensor (2).

6. The method according to claim 3, **characterized in that** at least one light source of a lighting system (3) is controlled to illuminate the package (1) during an exposure time of the linear sensor corresponding to one of the n lines of images (I1, I2,... In) of each sequence (S1, S2,... Sj).

7. The method according to one of claims 1 to 6, **characterized in that** it consists, for each acquisition of an line of images, with an exposure time (Ti) and a light source, of illuminating the light source before the beginning of the exposure of the linear image sensor, extinguishing said light source after the end of the exposure of the linear image sensor.

8. A device for inspecting the quality of the welds presented by packages (1) containing products and being hermetically sealed by heat sealing, the packages being made in whole or in part of translucent or transparent materials and being led to pass in front of a linear image sensor (2), successively delivering lines of images, the package (1) being made up of at least one cell containing products and being hermetically sealed by heat sealing using a film (1₂) and the sensor being located next to the cells or next to the film such that its field of width (L), considered perpendicular to the direction of movement, encompasses one or several cells, the device comprising at least one lighting system (3) making it possible to illuminate the package, with, as lighting system (3), a first light source (3₁) located on the cell side (1₁) and illuminating the package on at least the field of the linear image sensor (2) and a second light source (3₂) located on the film side (1₂), **characterized in that** it comprises:
• means for adjusting the exposure time (Ti) of the linear image sensor (2) to different values,
• means for adjusting the lighting conditions (EK) of the lighting system (3) to different values,
• a control and image processing unit (2₃) including:
∘ means for controlling the means for adjusting the exposure time (Ti), means for modifying lighting conditions of the lighting system (3) and acquiring images via the linear image sensor so as to acquire, cyclically, for each movement increment, a sequence of n successive lines of images (I1, I2,... In), (with n greater than 1), so as to obtain, for j movement increments, sequences (S1, S2,... Sj), the n lines of images of each sequence being obtained with different exposure times (Ti) and/or different lighting conditions (Ek),
∘ means for grouping together the obtained lines of images (I1, I2,... In) in the sequences with both the same exposure time (Ti) and the same lighting conditions (Ek) so as to obtain n superimposable images (I1, I2,... In) with at least j lines of images, the images being obtained with different exposure times (Ti) and/or different lighting conditions (Ek),
∘ means for analyzing, separately or in combination, the n images (I1, I2,... In) in order to determine at least one characteristic of the inspected package(s)
the control and processing unit (2₃) providing:
∘ for the acquisition of the first line of images of the sequences, the exposure of the sensor (2) for a time (T1) and the activation of only the first light source (3₁) during said exposure time (T1),
∘ for the acquisition of the second line of images of the sequences, the exposure of the sensor (2) for a time (T2) and the activation of only the second light source (3₂) during said exposure time (T2).

9. The device according to claim 8, **characterized in that** a lighting system (3) includes at least one light source, the illumination duration of which is shorter than the reading period of the linear image sensor (2), the duty factor of the illumination of the light source being able to reach 50%.

10. The device according to one of claims 8 or 9, **characterized in that** the lighting system (3) includes a third light source located on the linear image sensor side (2) and illuminating the package on at least the field of the linear sensor (2) and **in that** the control and processing unit (2₃) provides:
• for a first part of the package, the acquisition of the sequences each formed of the first line of images obtained with the first light source and the second line of images obtained with the second light source,
• for a second part of the package, the acquisition of the sequences each formed by the first line of images obtained with the first light source and of the second line of images obtained with the third light source, with an exposure time (T3) of the linear image sensor (2).

11. A method for inspecting the quality of the welds presented by product packages (1) using a linear image sensor (2), successively delivering lines of images, the packages being made in whole or in part of translucent or transparent materials and each inspected package being in motion relative to said sensor and being illuminated using at least one lighting system (3), the packages (1) being made up of at least one cell containing products and being hermetically sealed by heat sealing using a film (1₂), the method being **characterized in that** one:
• translates the inspected packages in a direction not parallel to the optical axis of the linear image sensor (2),
• arranges the linear image sensor (2) next to the cells or next to the film such that its field of width (L) considered perpendicular to the direction of movement encompasses one or several cells,
• acquires cyclically for each movement increment, a sequence of n successive lines of images (I1, I2,... In), (with n greater than 1), so as to obtain for j movement increments, sequences (S1, S2,... Sj), the n lines of images of each sequence being obtained with different exposure times (Ti) and/or different lighting conditions (Ek), by acquiring, for each sequence, a first line of images with a first exposure time, by activating a first light source (3₁) located on the cell side (1₁), then a second line of images with a second exposure time, by activating a second light source (3₂) located on the film side,
• groups together the obtained lines of images (I1, I2,... In) in the sequences with both the same exposure time (Ti) and the same lighting conditions (Ek) so as to obtain n superimposable images (I1, I2,... In) with at least j lines of images, the images being obtained with different exposure times (Ti) and/or different lighting conditions (Ek), by grouping together the first lines of images of each sequence, so as to obtain a first image with dimensions (jxL) in order to perform an inspection via light reflected or diffused by the surface of the package, or diffused by the package, and by grouping together the second lines of images of each sequence, so as to obtain a second image with dimensions (jxL) in order to perform an inspection via light reflected or diffused in the material of the package,
• analyzes, separately or in combination, the n images (I1, I2,... In) in order to determine at least one characteristic of the inspected package(s),
**in that** it consists of acquiring the sequences each formed by a first line of images and a second line of images, for a first part of the package, and **in that** it consists, for the second part of the package, of acquiring sequences each including the first line of images and a second line of images obtained with a third exposure time and activating a third light source located on the side of the linear sensor.

12. A device for inspecting the quality of the welds presented by package (1) made up of at least one cell containing products and being hermetically sealed by heat sealing using a film, the package being made in whole or in part of translucent or transparent materials and being led to pass in front of a linear image sensor (2), successively delivering lines of images, the device including at least one lighting system (3) making it possible to illuminate the packages, **characterized in that** it includes:
• means for adjusting the exposure time (Ti) of the linear image sensor (2), to different values,
• means for adjusting the lighting conditions (EK) of the lighting system (3) to different values,
• a control and image processing unit (2₃) including:
∘ means for controlling the means for adjusting the exposure time (Ti), means for modifying lighting conditions of the lighting system (3) and acquiring images via the linear image sensor so as to acquire, cyclically, for each movement increment a sequence of n successive lines of images (I1, I2,... In), (with n greater than 1), so as to obtain for j movement increments, sequences (S1, S2,... Sj), the n lines of images of each sequence being obtained with different exposure times (Ti) for identical lighting conditions,
∘ means for grouping together the obtained lines of images (I1, 12,... In) in the sequences with both the same exposure time (Ti) and the same lighting conditions (Ek) of so as to obtain n superimposable images (I1, I2,... In) with at least j lines of images, the images being obtained with different exposure times (Ti) for identical lighting conditions,
∘ means for analyzing, separately or in combination, the n images (I1, I2,... In) in order to determine at least one characteristic of the inspected package(s),
and **in that** it includes a device including:
• a linear image sensor located next to the cells or on next to the film such that its field of width, considered perpendicular to the direction of movement, encompasses one or several cells,
• as lighting system, a light source located on the side opposite the camera relative to the traveling package and illuminating the package on at least the field of the linear image sensor,
• a control and processing unit providing:
∘ for the acquisition of the first line of images of the sequences, the exposure of the sensor for a first exposure time and the activation of the light source during said exposure time,
∘ for the acquisition of the second line of images of the sequences, the exposure of the sensor for a second different exposure time, for identical lighting conditions, and the activation of the light source during said exposure time.

13. The device according to claim 12, **characterized in that** the lighting system (3) includes at least one light source, the illumination duration of which is shorter than the reading period of the linear image sensor (2), the duty factor of the illumination of the light source being able to reach 50%.

14. A method for inspecting the quality of the welds presented by heat sealed product packages (1), the packages being made in whole or in part of translucent or transparent materials, using a linear image sensor (2), successively delivering lines of images, each inspected package being in motion relative to said sensor and being illuminated using at least one lighting system (3), the method being **characterized in that** one:
• acquires cyclically, for each movement increment, a sequence of n successive lines of images (I1, I2,... In), (with n greater than 1), so as to obtain, for j movement increments, sequences (S1, S2,... Sj), the n lines of images of each sequence being obtained with different exposure times (Ti) for identical lighting conditions,
• groups together the obtained lines of images (I1, I2,... In) in the sequences with both the same exposure time (Ti) and the same lighting conditions (Ek) so as to obtain n superimposable images (I1, I2,... In) with at least j lines of images, the images being obtained with different exposure times (Ti) for identical lighting conditions,
• analyzes, separately or in combination, the n images (I1, I2,... In) in order to determine at least one characteristic of the inspected package(s),
and **in that** in each sequence (S1, S2... Sj) of n lines of images (I₁, I₂,... In), at least two lines of images are obtained with different exposure times (Ti) for identical lighting conditions so as to obtain at least two images with dynamics adapted to different transmission or reflection characteristics of the package.
